# DEMANDE DE BREVET EUROPEEN

(11) **EP 1 453 242 A2**
(43) Date de publication de la demande: **01.09.2004**
(21) Numéro de dépôt: 03293235.2
(22) Date de dépôt: 19.12.2003
(51) Int. Cl.: H04L 12/24

(54) **Sonde de mesure de paramètres de qualité de service pour un réseau de télécommunication**

(30) Priorité: 21.02.2003 FR 0302136
(71) Demandeur: ALCATEL, 75008 Paris (FR)
(72) Inventeur: Couturier, Alban, 92320 Chatillon (FR)
(74) Mandataire: Chaffraix, Sylvain

(57) **Abrégé**

Sonde de mesure (S), possédant des moyens pour accéder aux flux de données constitués de paquets, transmis le long d'un chemin formé par une pluralité d'équipements d'un réseau de télécommunication, et des moyens de mesure (S_{M}) pour effectuer des mesures, conformément à des informations de configuration (B_{C}), disposant de surcroît de moyens de détermination (S_{D}) pour déterminer qu'un ou plusieurs paquets transmis forment un message de signalisation et des moyens de signalisation (S_{S}) pour déterminer à partir de ce message de signalisation, les informations de configuration.

## Description

La présente invention est relative à la mesure de paramètres caractéristiques des équipements traversés par un flux de données au sein d'un réseau de données, notamment de télécommunication. Elle s'applique particulièrement bien à la mesure de paramètres de qualité de service rendue pour des flux de données transitant sur ce réseau de télécommunication, mais pourrait s'appliquer à d'autres caractéristiques des équipements telles leur charge, leur température, l'état de leurs files d'attente etc., situés sur le chemin de ces flux de données.

Il est en effet important d'avoir des mesures de certains paramètres afin de vérifier le bon fonctionnement de son réseau, et en particulier de savoir si la qualité de service demandée par des clients est effectivement fournie.

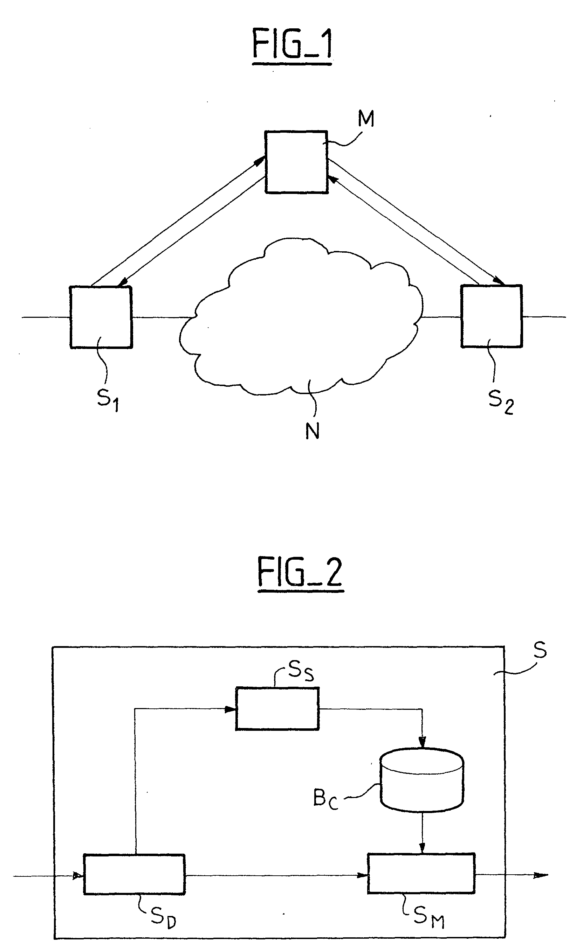

Il existe, pour ce faire, divers dispositifs connus de l'état de la technique.
Par exemple, la société Ipanéma commercialise des sondes de mesure qui peuvent être placées à l'accès du réseau de télécommunication, tel qu'indiqué sur la figure 1 : les sondes S₁ et S₂ sont connectées au réseau de télécommunication N. Lorsque des flux de données transitent par ses sondes S₁ et S₂, elles mesurent certains paramètres et fournissent ces paramètres à un dispositif de mesure M.
Le dispositif de mesure M transmet aux sondes des informations sur les paramètres qu'elles doivent mesurer. Il peut ainsi configurer le ou les flux de données sur lesquels doivent porter les mesures, la périodicité des mesures etc.

Un tel dispositif souffre toutefois d'un problème majeur dès lors que le réseau de télécommunication comporte plusieurs domaines, chaque domaine pouvant être administré par un opérateur de télécommunication différent. Les sondes ne peuvent être installées qu'aux extrémités du domaine administré par l'opérateur de télécommunication. Dès lors que l'on se situe dans un environnement réel, c'est-à-dire constitué de plusieurs domaines, il n'est plus possible d'obtenir des mesures de bout en bout, puisque l'opérateur d'un domaine ne pourra généralement accéder qu'aux équipements de son domaine, à l'exclusion des autres domaines.
Par ailleurs, il peut être intéressant d'avoir une mesure non pas entre les extrémités du réseau ou du domaine, mais entre les terminaux de télécommunication eux-mêmes, ou même sur les différents domaines ou équipements traversés par un flux de données.
Cela est particulièrement souhaitable dans le cas de terminaux de téléphonie sur IP (Internet Protocol). Dans cette situation, il ne paraît pas clair de savoir comment installer et/ou configurer les sondes chez le client ou au sein des réseaux traversés.
Ainsi, l'entité désirant effectuer les mesures doit pour ce faire, découvrir ou configurer les différentes sondes de mesure mises en place dans les différents domaines du réseau de télécommunication. La solution de l'état de la technique est muette sur cette problématique.

Le but de la présente invention est de proposer une solution pour la mesure de paramètres, notamment de qualité de service, facilement configurable et ne souffrant pas des problèmes des solutions de l'état de la technique.

Pour ce faire, l'invention a pour objet une sonde de mesure, possédant des moyens pour accéder aux flux de données constitués de paquets, transmis le long d'un chemin formé par une pluralité d'équipements d'un réseau de télécommunication, et des moyens de mesure pour effectuer des mesures, conformément à des informations de configuration. Cette sonde se caractérise en ce qu'elle dispose de surcroît
- de moyens de détermination pour déterminer qu'un ou plusieurs paquets transmis le long de ce chemin forment un message de signalisation et
- des moyens de signalisation pour déterminer à partir de ce message de signalisation, les informations de configuration.
   Préférentiellement, ces mesures sont relatives auxdits flux de données.

Selon un mode de réalisation de l'invention, les moyens de mesure sont aptes à transmettre des rapports de mesures, contenant les mesures, à un dispositif de mesure déterminé par un identificateur contenu dans les informations de configuration.

Selon un mode de réalisation de l'invention, les mesures sont transmises au dispositif de mesure par l'intermédiaire d'un médiateur, les données transmises au médiateur contenant cet identificateur.

Selon un mode de réalisation de l'invention les moyens de détermination sont aptes à lire une marque spécifique, contenue dans le message reçu, et à déterminer si ce message reçu est un message de signalisation à partir de cette marque spécifique.

Selon un mode de réalisation de l'invention, la base de configuration contient un ensemble d'enregistrements, chacun enregistrement correspondant à une tâche de mesure et contenant notamment :
- un filtre déterminant les paquets sur lesquels les mesures doivent porter,
- des paramètres relatifs à la méthode de mesure

Les paramètres peuvent notamment être choisis dans un ensemble comprenant :
- la durée durant laquelle les mesures doivent être réalisées,
- Des informations d'échantillonnage, notamment une fonction de hachage,
- un paramètre déclenchant l'horodatage des paquets à mesurer,
- un paramètre déclenchant l'identification des paquets à mesurer, notamment au moyen d'une fonction de hachage.
- Un paramètre déclenchant le comptage des paquets,
- la méthode pour transmettre les mesures au dispositif de mesure.

Selon un mode de réalisation de l'invention, les transmissions avec le dispositif de mesure sont sécurisées. Ces moyens de sécurisation peuvent notamment être transmis par un message de signalisation.

Selon un mode de réalisation de l'invention, la sonde de mesure comporte en outre des moyens pour décider de la création d'une nouvelle tâche de mesure, par les moyens de signalisation, notamment en fonction d'un indicateur de sensibilité associé à cette sonde de mesure.

Selon un mode de réalisation de l'invention, la décision est en outre fonction d'une priorité contenue dans le message reçu.

L'invention a également pour objet un élément de réseau, notamment un routeur, comportant une sonde de mesure telle que précédemment décrite, ainsi qu'un réseau de communication comportant de telles sondes de mesure, et éventuellement un dispositif de mesure.

Ainsi, par l'utilisation d'un protocole de signalisation « dans le chemin » pour indiquer aux sondes de mesure d'établir des tâches de mesure ou pour modifier ou supprimer celles-ci, l'invention permet de ne pas avoir une connaissance préalable de la localisation des sondes de mesure, et de contourner le problème des sondes de mesure disposées dans un domaine administré par un opérateur différent de celui du dispositif de mesure.

L'invention et ses avantages apparaîtront de façon plus claire dans la description de mises en oeuvre qui va suivre en liaison avec les figures annexées.
La figure 1, déjà commentée, illustre une solution de l'état de l'art.
La figure 2 représente l'architecture fonctionnelle d'une sonde conforme à l'invention.
La figure 3 schématise les communications entre les sondes selon l'invention et un dispositif de mesure.
La figure 4 illustre la sonde de l'invention dans un contexte de mise en oeuvre.

Selon différentes mises en oeuvre de l'invention, la sonde de mesure peut être incorporée dans un dispositif spécifique, tel ceux de l'état de l'art de la société Ipanéma, ou bien dans un équipement de réseau tel un commutateur, un routeur IP etc.
Dans ce dernier cas, la sonde de mesure peut notamment être un module logiciel pouvant être exécuté par le système d'exploitation de l'équipement de réseau. Ce module logiciel peut être installé lors de la mise en service de l'équipement de réseau ou bien ultérieurement dans le cadre d'une mise à jour du logiciel de cet équipement, et/ou de façon dynamique par téléchargement à travers le réseau, par exemple depuis un serveur dédié. Ce module logiciel peut par exemple être développé en langage Java™, afin de faciliter son implémentation dynamique sur les équipements de réseau.

Par équipement de réseau, on entend notamment, dans le cadre d'un réseau basé sur une pile protocolaire IPv4 ou IPv6 (*Internet Protocol, version 4*/*6*), un routeur.

Par la suite, la mise en oeuvre de l'invention pour la mesure de paramètres de qualité de service sera plus particulièrement détaillée, bien que l'invention puisse également s'appliquer à d'autres paramètres.

La figure 2 illustre l'architecture fonctionnelle d'une sonde de mesure S, conforme à l'invention.

Cette sonde de mesure comporte tout d'abord des moyens de détermination S_{D'} Le rôle de ces moyens de détermination est de déterminer si un ou des paquets de données entrant forment un message de signalisation ou s'ils appartiennent à un flux de données. Dans le cas typique d'un réseau de données basé sur une pile protocolaire de type IPv4 *(Internet Protocol version 4*) ou IPv6 (*Internet Protocole, version 6*), les messages de signalisation peuvent en effet être constitués de plusieurs paquets de données.
La détermination peut être réalisée par une marque spécifique. Cette marque spécifique peut être un numéro de port dédié, un DSCP dédié (*DiffServ Code Point*), un numéro de protocole de l'entête IP etc.

Si le groupe de paquets de données reçu forme un message de signalisation, il (ou son contenu) est transmis à des moyens de signalisation S_{S}, dont le rôle est d'interpréter le contenu de ce message de signalisation. En fonction du contenu de ce message, les moyens de signalisation peuvent modifier une base de configuration B_{C}. La base de configuration B_{C} contient la configuration de la sonde. Elle peut comporter un ensemble d'enregistrement, chaque enregistrement correspondant à une tâche de mesure.

D'une façon générale, tout ou partie des enregistrements de la base de configuration B_{C} détermine quel flux de données doit être mesurés par la tâche de mesure correspondante, à quelle fréquence doivent être faite les mesures, sur quel paramètre elles doivent porter etc. (On verra ultérieurement que selon un mode de réalisation de l'invention, certains de ces enregistrements peuvent ne pas correspondre à une tâche de mesure).
Selon la terminologie de l'IETF, ces enregistrements correspondent à un état de la sonde. Ces états peuvent être du type de ceux définies par exemple, pour le protocole RSVP (*ReSerVation Protocol*) définie par le RFC 2205 de l'IETF.

Le contenu des enregistrements sera détaillé plus loin, mais il est important de noter ici que les messages de signalisation peuvent déclencher :
- L'établissement d'une nouvelle tâche de mesure. Cet établissement provoque l'insertion d'un nouvel enregistrement, dans la base de configuration B_{C}, et donc la création d'un nouvel état, au sein de la sonde de mesure. Cet état peut préférentiellement être de type « soft state », c'est-à-dire qu'il sera automatiquement supprimé à l'expiration d'un certain délai.
- Le rafraîchissement d'un état. Dans le mode de réalisation où les états sont des états dits « soft states », des messages de rafraîchissement permettent de prolonger ce délai, par exemple en remettant un compteur à une valeur initiale. Bien entendu, si les états sont des états dits « hard states », aucun message de rafraîchissement n'est nécessaire, car l'état restera installé tant qu'un message de suppression n'est pas reçu, concernant cet état.
- La modification d'une tâche de mesure. Ce type de message peut avoir pour but de modifier une partie des paramètres associés à une tâche de mesure préalablement établie (par exemple, pour changer un taux d'échantillonnage des mesures, de façon dynamique, pour s'adapter à la charge du réseau, ou bien à la proximité d'un seuil critique). L'enregistrement correspondant dans la base de configuration B_{C} peut être modifié pour rendre compte de cette modification.
- La suppression d'une tâche de mesure. Cette suppression peut provoquer la suppression de l'enregistrement correspondant dans la base de configuration B_{C}. Dans la situation où les états sont de type « hard states », des messages de suppression sont transmis pour terminer la tâche de mesure et supprimer l'état correspondant.

Par ailleurs, selon un mode de réalisation, les groupes de paquets normaux sont transmis par les moyens de détermination à des moyens de mesure S_{M}. On entend par paquets normaux, des paquets dont le contenu n'est pas interprété par les routeurs comme le sont le contenu des paquets des différents protocoles réseau, comme les paquets de signalisation, les paquets de routage, les paquets ICMP etc. Toutefois, l'invention peut aussi s'appliquer à la mesure de flux de paquets « non normaux », tel par exemple, des flux de signalisation OSPF (*Open Shortest Path First).*

Le rôle de ces moyens de mesure S_{M} est d'effectivement réaliser la mesure sur les paquets reçus, en fonction de la configuration mémorisée dans la base de configuration B_{C}. Plus précisément, le rôle des moyens de mesure est de traiter les différentes tâches qui ont été mises en place sur la sonde de mesure ; la configuration de chaque tâche étant déterminée par le contenu de l'enregistrement correspondant dans la base de configuration B_{C}.

Comme dit précédemment, cette configuration peut déterminer plusieurs choses, pour chacune des tâches de mesure.

Tout d'abord, elle peut déterminer sur quoi doivent porter les mesures, c'est-à-dire les flux de données à mesurer, par exemple au moyen d'une liste d'identificateur de flux de données.
Pour ce faire, des filtres peuvent être mis en place, pour, d'une façon très générale, sélectionner un sous-ensemble de paquets par application de fonctions déterministes sur des parties du contenu du paquet telles des champs de l'entête ou des parties de la charge utile (payload). Un filtre peut aussi consister à appliquer une loi pseudo-probabiliste pour sélectionner le sous-ensemble. Le concept de filtre peut être conforme à celui par exemple définie dans le draft IETF « draft-ietf-psam-sample-tech-00.txt ».
Ces filtres peuvent notamment être utilisés pour sélectionner les paquets appartenant à un ou des flux de données, sur la base d'une liste d'identificateur.
Typiquement, ces identificateurs peuvent être, dans le cas d'un réseau IP, un 5-tuple composé des adresses et numéros de ports de l'émetteur et du destinataire du flux, et du numéro de protocole. Dans le cas d'un réseau IPv6 (Internet Protocol version 6), il peut être ajouté à ce 5-tuple, le champ « Flow Label ».

La configuration peut aussi préciser comment doivent être faites les mesures. Plus précisément, elle peut indiquer éventuellement :
- la durée durant laquelle le flux doit faire l'objet de mesures. Alternativement, il est possible de ne pas préciser de durée, l'arrêt des mesures devant ensuite être indiqué par l'émission d'un autre message de signalisation ou par l'expiration d'un délai en l'absence de message de rafraîchissement. Selon ce mode de réalisation, on a un mécanisme d'états (soft state) similaire à celui mis en oeuvre pour le protocole RSVP (*ReSerVation Protocol*).
- si ces les mesures doivent porter sur l'ensemble des paquets, ou au contraire si un échantillonnage doit être réalisé. Dans le cas d'un échantillonnage, la configuration peut de surcroît contenir la fréquence des mesures (un paquet sur n ; 1 paquet toutes les n milli-secondes...), une fonction de hachage avec une contrainte sur le résultat, etc.
- un paramètre déclenchant l'horodatage du paquet,
- un paramètre déclenchant l'identification du paquet grâce à une fonction de hachage.
- Un paramètre déclenchant le comptage des paquets,
- la méthode pour transmettre les mesures au dispositif de mesure M, notamment si ces mesures doivent être transmises pour chaque mesure effectuée, ou bien si elles doivent être regroupées en un seul message afin de limiter les communications. Dans ce dernier cas, la configuration peut contenir la fréquence de transmission (une transmission pour n mesures, une transmission toutes les n milli-secondes...), etc.
- ...

Comme il sera vu ultérieurement, la configuration peut aussi indiquer un identificateur du dispositif de mesure, et des moyens de sécurisation.

Le choix des paramètres contenus dans le message de signalisation peut notamment dépendre du type de mesure à effectuer. Ainsi, les paramètres peuvent être différents s'il s'agit de mesurer un délai moyen de transmission ou bien un taux de pertes de paquets.

Dans le cas d'une mesure d'un délai moyen de transmission, un mode de réalisation de l'invention consiste à procéder aux étapes suivantes :
1) échantillonnage : il est important de ne pas sélectionner l'ensemble des paquets du sous-ensemble traité, pour ne pas encombrer le réseau et le collecteur M, mais, dans le même temps, un nombre minimum est nécessaire. Une difficulté supplémentaire est que les mêmes paquets doivent être sélectionnés par l'ensemble des sondes de mesure afin qu'une corrélation puisse être possible par le (ou les) collecteurs M.
   Un procédé d'échantillonnage déterministe est donc mis en place, par exemple au moyen d'une fonction de hachage. Une fonction de hachage peut être une application mathématique, non bijective, qui associe à un contenu de paquets invariant (c'est à dire non modifié par les éléments de réseau), telle la charge utile du paquet, une valeur qui est testée pour déterminée si le paquet doit faire partie de l'échantillon ou non : comme cette fonction est une application, et comme elle se base sur un invariant, deux sondes aboutiront à la même valeur, et donc effectueront la même décision.
   Dans la pratique, cette fonction peut être choisie en fonction de la probabilité d'échantillonnage voulue, du débit du flux de données, et de l'entropie du contenu des paquets.
2) Ensuite, on associe une date au paquet sélectionné. Il convient à ce stade que l'ensemble des sondes possèdent des horloges synchronisées. Pour ce faire, les techniques de synchronisation connues de l'état de la technique pourront être utilisées, notamment l'utilisation d'un GPS (Global Positionning System) ou bien du protocole NTP (Network Time Protocol), défini par le RFC 1305 de l'IETF *(Internet Engineering Task Force*).
3) Dans un troisième temps, on « identifie » le paquet sélectionné. C'est-à-dire qu'on lui associe une valeur permettant de l'identifier de façon unique parmi les autres paquets du même flux et ceux des autres flux de données. Là aussi, l'identification peut être réalisée au moyen d'une fonction de hachage. Le résultat de la fonction de hachage, qui forme l'identificateur du paquet, doit être suffisamment long pour éviter que deux paquets différents aient des identificateurs identiques. La fonction de hachage doit être identique pour l'ensemble des sondes, afin qu'un même paquet soit associé à un même identificateur et permettre que le dispositif de mesure M (ou collecteur) puisse effectuer la corrélation entre les rapports lui provenant des sondes.
4) Enfin, la quatrième étape consiste à transmettre un rapport de mesures au dispositif de mesures ou collecteur M.
   Ainsi, pour un même paquet échantillonné, le collecteur M reçoit plusieurs rapports de mesure de la part de différentes sondes. Grâce à la propriété d'unicité des identificateurs, il peut facilement mettre en corrélation ses rapports de mesures et, en comparant les dates qui y ont été insérés par les sondes, il peut déterminer le délai du paquet échantillonné entre chaque sonde.
   Dans cet exemple, le message de signalisation comporte donc les éléments suivants : un filtre, une fonction de hachage pour l'échantillonnage, un paramètre déclenchant l'horodatage des paquets, une fonction de hachage pour l'identification.

Dans le cas d'une mesure d'un taux de pertes de paquets, le principe est sensiblement le même que dans l'exemple précédent. Selon un mode de réalisation, la différence réside dans le fait qu'à la place de la date de réception du paquet, le rapport de mesure contient le numéro d'ordre du paquet, donné par un compteur contenu dans la sonde.
Dans cet exemple, le message de signalisation comporte donc les éléments suivants : un filtre, une fonction de hachage pour l'échantillonnage, un paramètre déclenchant le comptage des paquets.

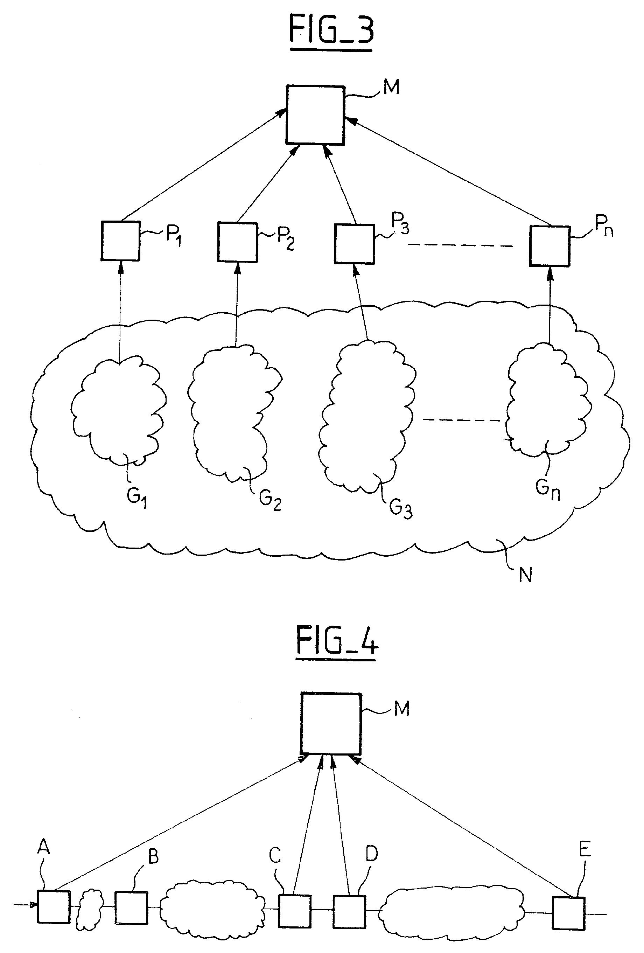

Comme évoqué précédemment, les mesures effectuées par les moyens de mesure S_{M} peuvent alors être transmises à un dispositif de mesures, non représenté sur la figure 2, dont le but pourra être de consolider les mesures reçues de la part de plusieurs sondes de mesure. Ces dispositifs de mesure peuvent aussi être appelés « collecteurs » (ou « collector », selon la terminologie en langue anglaise).
Un identificateur de ce dispositif de mesures peut par exemple être indiqué dans la base de configuration B_{C}. Ce dispositif de mesure peut notamment être différent selon les flux de données mesurés. Cet identificateur peut être fourni par les messages de signalisation et être inséré dans la base de configuration par les moyens de signalisation S_{S}, comme toute autre information de configuration.
Cet identificateur peut être une adresse IP (*Internet Protocol*), ou bien un numéro de protocole ou une adresse plus abstraite, telle un URL (*Unified Resource Locator*) décrit par le RFC 2396.
De surcroît, les mesures peuvent être envoyées au dispositif de mesure par l'intermédiaire de médiateurs (ou proxies, selon la terminologie en langue anglaise), ainsi que représenté sur la figure 3. Le réseau de télécommunication N est composé d'un ensemble d'équipements de réseau répartis en une pluralité de groupes. À chaque groupe G₁, G₂, G₃...Gₙ est associé un médiateur (ou *proxy*), respectivement P₁, P₂, P₃... Pₙ. Les mesures prélevées par les sondes de mesure d'un équipement de réseau sont transmises au médiateur associé au groupe correspondant. Ce médiateur peut alors transmettre les mesures au dispositif de mesure M. Selon un mode de réalisation de l'invention, un identificateur (l'adresse, par exemple) du dispositif de mesure M est inséré dans les rapports de mesures transmis aux médiateurs, afin que ceux-ci soient à même de transmettre les rapports de mesures, au dispositif de mesure approprié.

Éventuellement, les médiateurs peuvent réaliser un pré-traitement préalablement à l'envoie vers le dispositif de mesure M. Ce pré-traitement peut par exemple simplement consister à agréger les mesures reçues des sondes, afin d'envoyer des rapports plus synthétiques au dispositif de mesure M et de limiter le trafic.

Ce mode de réalisation est avantageux dans le cas de grands réseaux de télécommunication, puisqu'il permet de mieux répartir les communications entre éléments de réseau et dispositif(s) de mesure, ainsi que de limiter les communications inter-opérateurs en cas de mesures sur différents réseaux.

Selon un mode de réalisation de l'invention, les mesures peuvent être transmises au dispositif de mesures sous une forme sécurisée, par exemple de façon codée par une clé publique.

Un des avantages de l'invention est de facilement établir et déterminer un nombre important de sondes de mesure. Ces sondes de mesure peuvent être redondantes, c'est-à-dire plus nombreuses qu'il serait nécessaire. Par exemple, pour mesurer des paramètres de qualité de service entre 2 points A et B, deux sondes seraient nécessaires, mais on peut choisir d'en établir 2 au voisinage du point A et 2 au voisinage du point B. L'intérêt d'une telle redondance est de minimiser les risques d'erreurs de mesure ou de déficience d'une sonde de mesure.
Un autre avantage de l'invention est de facilement trouver et configurer des sondes de mesures. Les architectures de l'état de l'art à 2 sondes nécessitent de déterminer qui sont les sondes qui vont pouvoir être utilisées et y accéder. Dans une situation multi-domaine, une mesure peut difficilement être demandée par un opérateur, sur une sonde d'un autre opérateur. En plus de résoudre ces problèmes, l'invention permet de faire plusieurs mesures sur le chemin d'un flux pour mieux localiser un dysfonctionnement (une congestion, un problème de qualité de service...).
Un autre avantage de l'invention est que les mesures sont effectuées par les sondes de mesure sans que celles-ci aient connaissance de la présence des autres, et *a fortiori*, mesures effectuées par d'autres sondes de mesure. Aussi, toute mesure intentionnellement erronée fournie par une sonde de mesure pourra être facilement détectée par comparaison avec des mesures fournies par des sondes de mesure à proximité.

Selon un mode de réalisation de l'invention, les moyens de signalisation S_{S} de la sonde de mesure disposent par ailleurs de moyens pour décider de créer ou non, une nouvelle tâche de mesure.
Il peut être choisi de n'insérer dans la base de configuration B_{C} que les enregistrements associés à des tâches de mesure créées, ou bien les enregistrements associés à tout message de signalisation requérant la création d'une tâche de mesure, que celle-ci soit acceptée ou non par les moyens de signalisation S_{S}. Cette deuxième mise en oeuvre est surtout intéressante lorsque des états de type « soft states » ont été choisis : dans cette mise en oeuvre, des messages de rafraîchissement peuvent être régulièrement reçus. Le fait de garder trace des messages de signalisation « refusés » permet de garder une cohérence dans les décisions prises.

Afin de prendre ces décisions, la sonde de mesure est associée à un indicateur de sensibilité.
Cet identificateur de sensibilité peut par exemple représenter une probabilité que la sonde de signalisation décide de traiter le message de signalisation. Par exemple, lorsqu'elle reçoit un message de signalisation, la sonde de mesure peut déclencher le tirage d'un nombre aléatoire. Par comparaison avec l'indicateur de sensibilité, elle détermine facilement si le message de signalisation doit être traité ou non.
Selon une mise en oeuvre, ce mécanisme n'agit que pour les messages de signalisation contenant des informations relatives à l'ajout d'une tâche de mesures. A contrario, les messages de signalisation modifiant une tâche de mesure ou supprimant une tâche de mesure préalablement existante, pourront toujours être traités, c'est-à-dire impliquer une modification de la base de configuration B_{C}, par les moyens de signalisation S_{S}.

Selon une mise en oeuvre de l'invention, les messages de signalisation peuvent contenir une priorité. La décision de traiter ou non le message de signalisation peut être pondérée par la valeur de cette priorité.
Par exemple, des travaux « routiniers » de mesure (de surveillance) peuvent être affectés d'une priorité basse. Si une anomalie a été repérée à un moment donné, un système de gestion pourra décider de transmettre un message de signalisation avec une priorité plus élevée afin de déclencher des mesures par un plus grand nombre de sondes de mesure, et donc de permettre une localisation plus précise du problème.
Selon un mode de réalisation particulier de l'invention, les messages de signalisation peuvent être mémorisés dans une autre base de données, non représentée sur la figure, même si les moyens de signalisation décident de ne pas accepter la création d'une nouvelle tâche de mesure et ne modifient pas la base de configuration B_{C}.

La figure 4 illustre une mise en oeuvre de l'invention.
Un réseau de télécommunication comporte 5 sondes de mesure A, B, C, D et E. Un message de signalisation est transmis à A puis successivement à B, C, D et E. Ce message de signalisation contient des informations de mesure relatives à la mise en place d'une tâche de mesure. Les sondes de mesure possèdent des indicateurs de sensibilité différents : les sondes A, C, D et E décident d'insérer ces informations de mesure dans leurs bases de configuration respectives. La sonde de mesure B décide d'ignorer le message de signalisation et ne modifie pas sa base de configuration.
Lorsque des messages appartenant au flux de données correspondant à ces informations de mesure, les sondes A, C, D et E prélèvent des mesures conformément à ces informations de mesure, ainsi qu'indiqué précédemment. Ces mesures sont transmises à un dispositif de mesure M.
Dans la mesure où les sondes de mesure C et D sont juxtaposées, si les mesures transmises par ces deux sondes diffèrent au-delà d'une marge d'erreur acceptable, le dispositif de mesure M sera en mesure de déterminer qu'une des sondes de mesure au moins est déficiente.
Si les mesures provenant des sondes de mesure A et C diffèrent au-delà d'un certain niveau, le dispositif de mesure pourra déterminer qu'une anomalie existe entre ces deux sondes.
Afin de préciser la localisation de l'anomalie, le dispositif de mesure M peut provoquer l'émission d'un nouveau message de signalisation à la sonde de mesure A, avec une priorité plus élevée. Cette fois-ci, la sonde de mesure B décide d'établir une tâche de mesure et d'insérer les informations de mesure dans sa base de configuration. À la réception d'un message du flux de données, la sonde de mesure B transmettra aussi des mesures au dispositif de mesure M.
En comparant les mesures reçues d'une part des sondes A et B et d'autre part des sondes B et C, le dispositif de mesure peut déterminer si l'anomalie se situe entre A et B ou entre B et C (ou si elle est répartie entre A et C).

Un avantage supplémentaire de l'invention est que les sondes de mesures A, C, D et E transmettent leurs mesures de façon indépendante les unes des autres. Même, chacune des sondes de mesure ne peut pas être informée du contenu des mesures des autres sondes, et même de l'existence de ces mesures et des sondes de mesure elles-mêmes.
Il en résulte un fort niveau de sécurité/fiabilité de l'invention.
Dans le cas où le réseau est multi-domaines, c'est-à-dire géré par plusieurs opérateurs, ces opérateurs peuvent ainsi avoir l'assurance que les informations de mesure ne pourront pas être connues des sondes de mesure appartenant à un domaine géré par un autre opérateur.

Selon un mode de réalisation de l'invention, les messages de signalisation sont conformes à la grammaire suivante, définie en forme de Backus-Naur (BNF, pour *Backus-Naur Form,* en langue anglaise) :

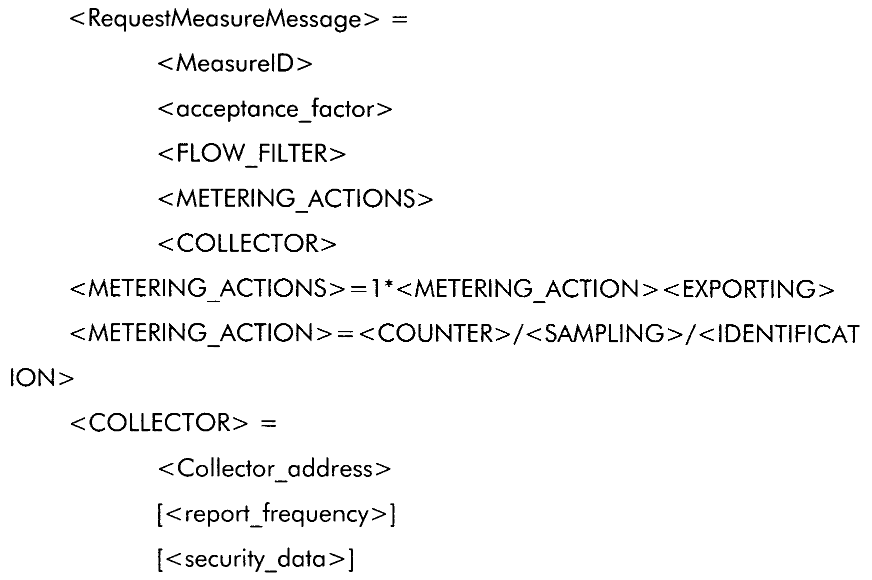

Cette grammaire indique qu'un message de signalisation selon l'invention indique, pour la création d'une tâche de mesure:
- un identificateur de la tâche de mesure,
- une priorité « acceptance factor » qui, en collaboration avec l'indicateur de sensibilité, permet de décider la création ou non de la tâche de mesure,
- un filtre, « FIOW_FILTER » permettant de sélectionner un sous-ensemble de paquets, sur lequel les mesures doivent être effectuées,
- des actions de mesures « METERING_ACTIONS », qui permettent de préciser quel type de traitement doit être effectué par les moyens de mesure S_{M}, notamment s'il s'agit de comptage (« COUNTER »), d'échantillonnage (« SAMPLING »), d'identification (« IDENTIFICATION »)...
- l'identification d'un collecteur M, notamment son adresse et optionnellement, des paramètres de fréquence et de sécurité.

## Revendications

1. Sonde de mesure (S), possédant des moyens pour accéder aux flux de données constitués de paquets, transmis le long d'un chemin formé par une pluralité d'équipements d'un réseau de télécommunication, et des moyens de mesure (S_{M}) pour effectuer des mesures, conformément à des informations de configuration (B_{C}), **caractérisé en ce qu'**elle dispose de surcroît de moyens de détermination (S_{D}) pour déterminer qu'un ou plusieurs paquets transmis le long dudit chemin forment un message de signalisation et des moyens de signalisation (S_{S}) pour déterminer à partir de ce message de signalisation, lesdites informations de configuration.

2. Sonde de mesure selon la revendication précédente, dans laquelle lesdites mesures sont relatives auxdits flux de données.

3. Sonde de mesure selon la revendication 1, dans laquelle lesdits moyens de mesure (S_{M}) sont aptes à transmettre des rapports de mesures, contenant lesdites mesures, à un dispositif de mesure (M) déterminé par un identificateur contenu dans lesdites informations de configuration.

4. Sonde de mesure selon la revendication précédente, dans laquelle, lesdites mesures sont transmises audit dispositif de mesure (M) par l'intermédiaire d'un médiateur, les données transmises audit médiateur contenant ledit identificateur.

5. Sonde de mesure selon la revendication 1, dans laquelle lesdits moyens de détermination (S_{D}) sont aptes à lire une marque spécifique, contenue dans ledit message reçu, et à déterminer si ledit message reçu est un message de signalisation à partir de cette marque spécifique.

6. Sonde de mesure selon la revendication 1, dans laquelle ladite base de configuration contient un ensemble d'enregistrements, chacun enregistrement correspondant à une tâche de mesure et contenant notamment :
• un filtre déterminant les paquets sur lesquels les mesures doivent porter,
• des paramètres relatifs à la méthode de mesure

7. Sonde de mesure selon la revendication 1, dans laquelle lesdits paramètres sont choisis dans un ensemble comprenant :
• la durée durant laquelle les mesures doivent être réalisées,
• Des informations d'échantillonnage, notamment une fonction de hachage,
• un paramètre déclenchant l'horodatage des paquets à mesurer,
• un paramètre déclenchant l'identification des paquets à mesurer, notamment au moyen d'une fonction de hachage.
• Un paramètre déclenchant le comptage des paquets,
• la méthode pour transmettre les mesures au dispositif de mesure M.

8. Sonde de mesure selon la revendication 3, dans laquelle les transmissions avec le dispositif de mesure (M) sont sécurisées.

9. Sonde de mesure selon la revendication précédente, dans laquelle les moyens de sécurisation sont transmis par un message de signalisation.

10. Sonde de mesure selon la revendication 1, comportant en outre des moyens pour décider de la création d'une nouvelle tâche de mesure, par lesdits moyens de signalisation (S_{S}), notamment en fonction d'un indicateur de sensibilité associé à ladite sonde de mesure.

11. Sonde de mesure selon la revendication 10, dans laquelle la décision est en outre fonction d'une priorité contenue dans ledit message reçu.

12. Élément de réseau, notamment routeur, comportant une sonde de mesure selon l'une des revendications précédentes.

13. Réseau de télécommunication comportant des sondes de mesures selon l'une des revendications 1 à 11.

14. Réseau de télécommunication selon la revendication précédente, comportant de surcroît un dispositif de mesures (M).
